# EUROPÄISCHE PATENTSCHRIFT

(11) **EP 1 549 511 B1**
(45) Veröffentlichungstag und Bekanntmachung des Hinweises auf die Patenterteilung: **10.10.2007**
(21) Anmeldenummer: 04763326.8
(22) Anmeldetag: 19.07.2004
(51) Int. Cl.: B05D 7/00, D21H 27/28, E04F 15/02, E04F 15/16

(54) **BLATT- ODER BAHNFÖRMIGE DEKORATIVE BESCHICHTUNGSFOLIE SOWIE VERFAHREN ZUM HERSTELLEN EINER SOLCHEN**
SHEET- OR WEB-LIKE, DECORATIVE COATING FILM AND METHOD FOR PRODUCING THE SAME
PELLICULE DE REVETEMENT DECORATIVE EN FORME DE FEUILLE OU DE BANDE ET PROCEDE DE FABRICATION

(30) Priorität: 17.07.2003 EP 10332768
(43) Veröffentlichungstag der Anmeldung: 06.07.2005
(73) Patentinhaber: KUNZ HOLDING GMBH & CO. KG, D-72669 Unterensingen (DE)
(72) Erfinder: HALLER, Heinz, 73207 Plochingen (DE)
(74) Vertreter: Behrmann, Niels
(86) Internationale Anmeldenummer: PCT/EP2004/008035
(87) Internationale Veröffentlichungsnummer: WO 2005/009758

(56) Entgegenhaltungen:
- EP-A- 0 296 395
- WO-A-00/22039
- DE-A- 4 118 731
- DE-A- 4 219 446
- DE-A- 4 413 619

## Beschreibung

Die vorliegende Erfindung betrifft ein Verfahren zum Herstellen eines blatt- oder bahnförmigen dekorativen Beschichtungsmaterials, insbesondere eine Beschichtungsfolie, eine derartige dekorative Beschichtungsfolie sowie eine Verwendung einer solchen.

Aus dem Stand der Technik sind dekorative Beschichtungsfolien, etwa in Form von sogenannten Finish-Folien, allgemein bekannt; sie werden da beispielsweise zum Herstellen von Möbeln verwendet und ausnahmsweise zur Herstellung von Laminatfußböden.

Insbesondere in diesem Einsatzgebiet bzw. für die Beschichtung von anderen, stark beanspruchten Flächen wie etwa im Küchen- oder industriellen Produktionsbereich kommt es besonders auf die Abriebfestigkeit einer mit einer Beschichtungsfolie erzeugten Beschichtung an. Aus dem Stand der Technik sind dabei Vorgehensweisen bekannt, bei welchen für Laminatfußböden korundhaltige, duroplastische Harze verwendet werden; der Korund ist entweder in einem (ansonsten füllstofffreien) Papierträger enthalten, der dann mit Melamin-Formaldehyd-Harz getränkt wird, oder geeignete Papiere werden mit korundhaltigen Harzen imprägniert (siehe hierzu etwa die DE 195 08 797 C1). Nach dem Aufpressen der Harzfilme mit einem darunter liegenden, ebenfalls mit Harz imprägnierten (und typischerweise bedruckten) Papier auf eine Trägerplatte erhält man einen dekorativen Werkstoff mit abriebfester, duroplastischer Beschichtung.

Eine alternative Vorgehensweise zum Herstellen von abriebfesten Beschichtungen ist in der DE 42 19 446 offenbart: In strahlenhärtende Bindemittel werden Füllstoffe (meist Korund) eingebracht, wobei die Bindemittel dann flüssig auf einen Träger aufgebracht werden. Nach einer Vernetzung durch Bestrahlung mittels UV- bzw. Elektronenstrahlen werden die Korundpartikel fest in das vernetzte Bindemittel eingebunden, so dass die gewünschte Beschichtung mit hoher Abriebfestigkeit entsteht.

Allerdings eignen sich die beiden vorbeschriebenen Vorgehensweisen aus dem Stand der Technik nur bedingt und unter bestimmten Voraussetzungen für die Herstellung von beliebig kaschierfähigen und ummantelungsfähigen (d.h. hoch flexiblen) folienartigen Beschichtungen. Beschichtungen mit duroplastischen und strahlenvernetzten Bindemitteln sind nämlich insbesondere bei größeren Schichtdicken und hoher Vernetzungsdichte sehr spröde. Zudem sind die auf die vorstehend beschriebene Weise hergestellten Beschichtungen, sofern sie in Folienform vorliegen, nicht plan, sondern neigen unerwünscht zu starkem Einrollen (Schüsseln), so dass eine spätere Weiterverarbeitung deutlich erschwert ist.

Aus der DE 41 18 731 A1 ist ein Verfahren zum Herstellen einer Beschichtungsfolie bekannt, bei welcher eine Trägerschicht aufeinanderfolgend mit zwei Harzschichten nass-innass versehen ist, wobei das Harzmaterial mit Mattierungsmitteln versehen ist und zum Herstellen eines kratzfesten Lackfilms ein gemeinsames Aushärten mittels Elektronenstrahlen erfolgt.

Aus der EP 0 296 395 A2 ist ein Verfahren sowie eine Vorrichtung zur Herstellung matter Lackoberflächen bekannt, bei welchem wiederum auf einem Foliensubstrat zwei aufeinanderfolgende Lackschichten aufgebracht werden, jedoch erfolgt hier das Bestrahlen jeder einzelnen Schicht nach dem Auftrag. Auch sind Mattierungsmittel zum Herstellen matter Oberflächen vorgesehen.

Aufgabe der vorliegenden Erfindung ist es daher, ein dekoratives Beschichtungsmaterial, insbesondere in Form einer dekorativen Beschichtungsfolie, zu schaffen, welches gegenüber aus dem Stand der Technik bekannten Materialien deutlich flexibler ist und sich damit für das flächige Kaschieren und für Ummantelungsaufgaben eignet, und welches zudem in planer Form vorliegt bzw. nach Beendigung des Herstellungsprozesses sich nicht in unerwünschter Weise einrollt. Ferner ist ein Verfahren zum Herstellen eines derartigen Beschichtungsmaterials (Beschichtungsfolie) zu schaffen.

Die Aufgabe wird durch das Verfahren mit den Merkmalen des Hauptanspruchs, die Beschichtungsfolie mit den Merkmalen des unabhängigen Anspruchs 13 sowie die Verwendung nach dem Patentanspruch 17 gelöst. Vorteilhafte Weiterbildungen der Erfindung sind in den Unteransprüchen beschrieben.

In erfindungsgemäß vorteilhafter Weise wird Gebrauch gemacht von einer für die Basisschicht verwendeten Masse, welche Harze aufweist, die strahlenhärtend (strahlenhärtbar) sind (im Rahmen der vorliegenden Erfindung soll als "strahlenhärtend" solches Harz verstanden werden, welches mit Hilfe von Elektronenstrahlen vernetz- und härtbar ist - - ESH -- oder durch Bestrahlung mit UV-Licht, wobei hier ggf. Photoinitiatoren zuzugeben sind), jedoch nicht thermisch aushärten.

Ein derartiges Bindemittelsystem als Basisschicht im Rahmen der vorliegenden Erfindung sorgt vorteilhaft zum einen dafür, dass die die Abriebfestigkeit bewirkenden Füllstoffe (z.B. Korund) mit hoher Bindewirkung gehalten werden können, gleichzeitig eignet sich eine solche Beschichtung jedoch zusätzlich zum äußerst haftfähigen Auftragen der Deckschicht (Decklack), wobei erfindungsgemäß die sich durch zwei Schichten (Deckschicht und Basisschicht) erstreckende Strahlenvernetzung für die gute Haftung sorgt. Ferner ermöglicht der Decklack, dass die glatte Korundschicht vollständig abgedeckt ist. Entsprechend wirkt sich eine solche, erfindungsgemäß hergestellte Anordnung dann schonend auf eventuelle im Produktionsprozess nachgeschaltete Aggregate (etwa Präge- oder Bemusterungsplatten für die resultierende Oberfläche) aus, da schädliche Abrasionseffekte wirksam verhindert werden können.

Schließlich zeichnet sich das erfindungsgemäß eingesetzte Bindemittel durch hohe Transparenz aus, so dass ein weiterbildungsgemäß auf der unterliegenden Trägerschicht aus Papier oder Kunststoff gebildete Bemusterung (z.B. eine Aufdruck) in hoher Bildqualität nach Fertigstellung der Schichtanordnung sichtbar bleibt.

Durch die beschriebenen Maßnahmen wird dann erreicht, dass die so erzeugte Beschichtungsfolie überraschend starke Abriebfestigkeit zeigt; unter Anwendung der nach EN 13329 geregelten Kriterien zur Messung der Abriebfestigkeit werden Werte deutlich oberhalb 2.500 Umdrehungen erreicht, so dass auf die beschriebene Weise Beschichtungen der Abriebklasse AC3 hergestellt werden können, was deutlich oberhalb dem mit dem beschriebenen Stand der Technik bei vergleichbarer Schichtdicke Erreichbaren liegt.

Während es einerseits bevorzugt ist, die Deckschicht lösungsmittelfrei aufzutragen (so dass insoweit nach dem Aushärten bzw. Vernetzen die vorteilhaft im Bereich zwischen etwa 10 und 30 Mikrometern liegende Schichtdicke im feuchten Zustand unverändert bleibt), ist es alternativ möglich, dass strahlenhärtbare Harze für die Deckschicht auch in einer wässrigen Dispersion vorliegen.

Während erfindungsgemäß vorgesehen ist, die Deckschicht ohne abrasive Füllstoffe (Al₂O₃, SiO₂ usw.) und weiterbildungsgemäß vorteilhaft ohne thermisch härtende Harze vorzusehen, ist es durch die vorliegende Erfindung jedoch nicht ausgeschlossen, dass der Deckschicht zu Zwecken der Einfärbung Pigmente (etwa TiO₂) zugesetzt werden, oder aber das Harz der Deckschicht durch sogenannte Nanopartikel zur Verbesserung der Kratzfestigkeit modifiziert ist; zur ergänzenden Offenbarung wird auf die WO 00/22039 verwiesen, welche im Hinblick auf die Vorgehensweise bei der Modifikation durch Nanopartikel in die vorliegende Offenbarung einbezogen gelten soll.

Besonders bevorzugt ist es zudem, weiterbildungsgemäß die Deckschicht vor dem Vernetzen zu strukturieren. Gerade dann, wenn die unterliegende Trägerschicht eine Bedruckung oder dergleichen Bemusterung aufweist, bietet es sich an, zur Erzeugung von Holzfaser- oder Maserungseffekten eine dieser (Holz-)Bedruckung korrespondierende Strukturierung der Deckschicht vorzunehmen, indem die Strukturierungswerkzeuge entsprechend dem unterliegenden Muster ausgerichtet werden. Durch den erfindungsgemäß vorteilhaften Umstand der abrasiven füllmittelfreien Deckschicht lässt sich eine derartige Strukturierung verschleißarm und einfach vor dem erfindungsgemäßen Elektronenstrahl-Härten bzw. -Vernetzen (zusammen mit den entsprechend strahlenhärtbaren Komponenten der unterliegenden Basisschicht) erreichen.

Durch die vorliegende Erfindung wird in vorteilhafter Weise eine Beschichtungsfolie erreicht, welche sich günstig als Kaschierfolie eignet: Nicht nur weist diese (gerade gegenüber den aus dem Stand der Technik bekannten Produkten) deutlich erhöhte Flexibilitätseigenschaften auf (so dass auch problematische Kaschieraufgaben, wie etwa die Ummantelung von Profilleisten oder Möbelteilen, problemlos und ohne Brüche bzw. Risse realisiert werden können), auch ist das erfindungsgemäße Verfahrensprodukt außerordentlich plan und neigt nicht zum nachteiligen Ein- bzw. Aufrollen. Nicht zuletzt aus diesem Grunde bietet es sich weiterbildungsgemäß auch an, die erfindungsgemäße Beschichtungsfolie rückseitig mit einer geeigneten Siegel- bzw. Heißklebeschicht zu versehen, so dass diese dann, etwa durch Bügeln oder dergleichen, problemlos auf einem gewünschten Kaschierungsträger (z.B. einer zu beschichtenden Holzplatte) aufgebracht werden kann.

Es bleibt festzuhalten, dass, im Gegensatz zu einigen aus dem Stand der Technik bekannten Produkten, das erfindungsgemäße Verfahrensprodukt strukturell fertiggestellt ist, insbesondere also in einem nachfolgenden Beschichtungs- bzw. Kaschierprozess auf einem Kaschierträger keine weitere strukturelle bzw. chemische Modifikation der Beschichtung erfolgt. Eine Veränderung der Oberfläche hinsichtlich ihrer polymeren Eigenschaften geschieht also während der weiteren Verarbeitung nicht.

Weiter weiterbildungsgemäß im Rahmen der Erfindung kann durch Zugabe von Mattierungsmitteln der beabsichtigte Glanzgrad eingestellt werden; Glanzgrade zwischen fünf und achtzig (gemessen nach DIN 67530 bei 60°) sind realistisch erreichbar. Weiterhin oder alternativ kann durch die Zugabe von sogenannten Slipadditiven in die Beschichtungsmasse der Deckschicht die Kratzfestigkeit weiter erhöht werden.

Nicht zuletzt aufgrund ihrer überragenden Abriebfestigkeitswerte, deutlich oberhalb von 2.500 U (gemessen nach der Methode S42 gemäß Norm EN 13329) eignet sich das erfindungsgemäße Verfahrensprodukt bzw. die erfindungsgemäße dekorative Beschichtungsfolie für stark beanspruchte Beschichtungsflächen, etwa Fußbodenplatten oder Fußbodenpaneelen. Zusätzlich sind bevorzugte Anwendungsgebiete im Rahmen der vorliegenden Erfindung der industrielle Produktionsbereich bzw. Küchenoberflächen.

Da zudem, im Vergleich zu zum Stand der Technik bekannten abriebfesten Oberflächen, entweder die Abriebeigenschaften deutlich verbessert sind, oder aber Produkte mit vergleichbaren Abriebfestigkeiten eine deutlich größere Schichtdicke (mit den damit verbundenen Nachteilen der Sprödigkeit und fehlenden Eignung für Flexibilität erfordernde Beschichtungen) aufweisen würde, steht zu erwarten, dass durch die vorliegende Erfindung der kratzfesten Beschichtung völlig neue Einsatz- und Anwendungsgebiete erschlossen werden. In diesem Zusammenhang ist dann festzustellen, dass, nicht zuletzt aufgrund der durch die relativ dünnen Schichten realisierten Materialersparnisse, Kostenreduzierungen in den Herstellungskosten möglich sind, welche die Größenordnung von 20% erreichen.

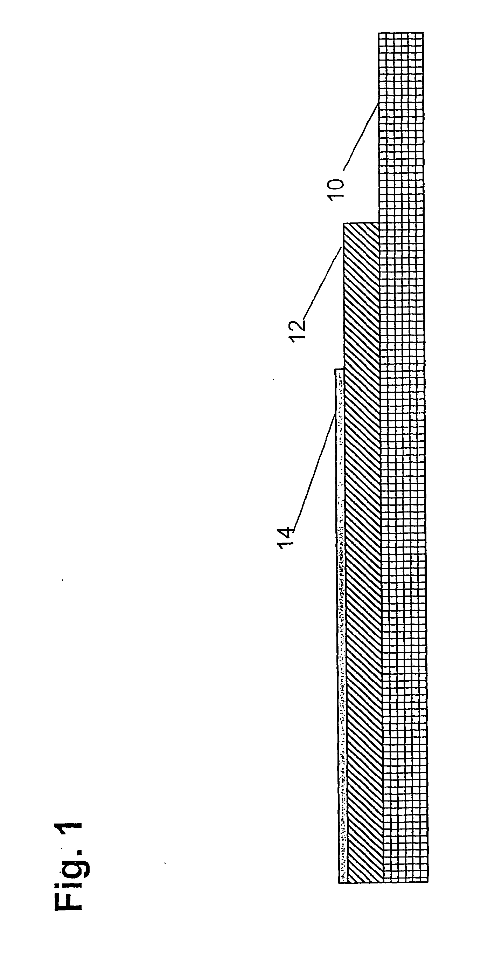

Weitere Vorteile, Merkmale und Einzelheiten der Erfindung ergeben sich aus der nachfolgenden Beschreibung bevorzugter Ausführungsbeispiele sowie anhand der einzigen Zeichnung; diese zeigt in
- Fig. 1: den schematischen Schichtaufbau der dekorativen Beschichtungsfolie gemäß einer ersten, bevorzugten Ausführungsform der vorliegenden Erfindung.

Der in der Fig. 1 gezeigte bahnförmige Träger weist eine typischerweise 35 bis 90 Mikrometer dicke Lage aus bedrucktem Papier als Trägerschicht 10 auf. Die Bedruckung erfolgt in Richtung auf eine zweilagige Beschichtung, nämlich eine unmittelbar auf der Papierschicht 10 aufgebrachte Basisschicht 12 sowie eine wiederum darauf aufgebrachte Deckschicht 14. Während die Basisschicht 12 zum Erreichen einer maximalen Abriebfestigkeit formuliert ist und abrasive, anorganische Füllstoffe (insbesondere Al₂O₃ sowie SiO₂) aufweist, dient die Deckschicht unter anderem der Versiegelung der Basisschicht und bestimmt die weiteren Oberflächeneigenschaften, insbesondere Glanzgrad, Haptik und Oberflächenstruktur.

Die Basisschicht, mit ansonsten bekannten Beschichtungsaggregaten als Walzenauftrag, mittels Schlitzdüse oder Koma-Rakel mit einer typischen Schichtdicke zwischen etwa 10 und 100 Mikrometern aufgetragen, weist wässrige strahlenhärtende Harze zwischen 22% und 95% (im Beispiel: 40%) sowie anorganische Füllstoffe in Form der oben angegebenen abrasiven Stoffe sowie zusätzlich Farbpigmente (z.B. TiO₂) im möglichen Bereich zwischen 10% und 70% auf, im Ausführungsbeispiel ca. 60%.

Eine typische Rezeptur zur Herstellung des Beschichtungsmaterials für die Basisschicht 12 könnte etwa wie folgt realisiert werden:
- 60 Teile wässriges strahlenhärtendes Harz (IRR 395, 40%ig)
- 40 Teile Füllstoff (Plakor 30).

Die Deckschicht besteht aus einem strahlenhärtenden Bindemittel, das entweder vollständig lösemittelfrei sein kann, oder aus einer strahlenhärtenden, wässrigen Dispersion besteht (max. ca. 50% bis 90% Wasser). Geeignete Harze für die Deckschicht sind Polyesteracrylate, Epoxyacrylate oder Urethanacrylate, wobei diese zur Verbesserung der Kratzfestigkeit in ihrer molekularen Struktur durch sogenannte Nanopartikel modifiziert sein können.

Weiterhin kann durch Zugabe von Mattierungsmitteln der Glanzgrad in der gewünschten Weise eingestellt werden (typische Glanzgrade zwischen 5 und 80, DIN 69530 bei 60°), auch können sogenannte Slipadditive zur weiteren Erhöhung der Kratzfestigkeit zugesetzt werden.

Ein typisches strahlenhärtbares Harzprodukt zur Realisierung der Deckschicht ist z.B. Ebecryl 1016. Der Auftrag erfolgt wiederum durch bekannte Beschichtungsmöglichkeiten, etwa Walzen-, Schlitzdüsen- oder Rakelauftrag, wobei das Auftragen sowohl inline (direkt nach einer Trocknung der Basisschicht), als auch in einem gesonderten Schritt, offline und in einer separaten Beschichtungsanlage erfolgt. Das darauffolgende Härten der Deckschicht durch Bestrahlung (UV- bzw. Elektronenstrahlen) bewirkt zusätzlich das Aushärten der strahlenhärtbaren Komponenten der Basisschicht, wobei im Fall der Härtung mit UV-Strahlung geeignete Photoinitiatoren den strahlenhärtbaren Komponenten zugesetzt sind.

Die so erzeugte Beschichtungsfolie zeichnet sich durch sehr hohe Abriebfestigkeit, jenseits von 1.500 Umdrehungen, üblicherweise jenseits von 2.500 U (Methode S42 entsprechend Norm EN 13329) aus.

Es handelt sich bei diesem Produkt um eine sogenannte Finish-Folie, da Bindemittel der Deckschicht und der Basisschicht vollständig ausgehärtet und vernetzt sind. Bei einer weiteren, nachfolgenden Verarbeitung, z.B. durch Aufkaschieren auf ein geeignetes Trägermaterial, erfolgen keine weiteren Änderungen der polymeren Eigenschaften. Insbesondere ist auch eine Verarbeitung unter hohem Druck und hoher Temperatur beim Aufkaschieren aus diesem Grunde nicht notwendig.

Das Folienprodukt zeichnet sich neben der beschriebenen hohen Abriebfestigkeit durch eine hohe Flexibilität und geringe Sprödigkeit aus, so dass es insbesondere in Kaschier- und Ummantelungsanlagen zur Veredelung verschiedenster Produkte, etwa Holzwerkstoffplatten, Leisten und mechanisch stark beanspruchter Möbelteile, eingesetzt werden kann. Die hohe Abriebfestigkeit macht es zu einer idealen Beschichtung für die Herstellung von Fußbodenplatten oder Fußbodenpanelen.

## Patentansprüche

1. Verfahren zum Herstellen eines blatt- oder bahnförmigen dekorativen, abriebfesten Beschichtungsmaterials, insbesondere Beschichtungsfolie, mit den Schritten:
- Beschichten einer Trägerschicht (10) aus Papier und/oder Kunststoff mit einer flüssigen oder pastösen, von organischen Lösungsmitteln freien Basisschicht (12), die wässrige, strahlenhärtende, jedoch keine thermisch härtenden Harze sowie einen abrasiven, bevorzugt anorganischen Füllstoff aufweist,
- Trocknen der mit der Basisschicht (12) beschichteten Trägerschicht (10), insbesondere unter Wärmezufuhr,
- Aufbringen einer ein strahlenhärtendes Harz und keine abrasiven Füllstoffe enthaltenden Deckschicht (14) auf die getrocknete, unvernetzte Basisschicht (12) und
- gemeinsames Aushärten oder Vernetzen der Deckschicht sowie der strahlenhärtenden Harze in der Basisschicht durch Bestrahlen der Deckschicht mit UV- und/oder Elektronenstrahlen.

2. Verfahren nach Anspruch 1, **dadurch gekennzeichnet, dass** die flüssige oder pastöse Basisschicht (12) in einer Schichtdicke zwischen 10 und 100 Mikrometern aufgetragen wird oder in einer solchen Schichtdicke aufgetragen wird, dass die Basisschicht im getrockneten Zustand eine Dicke zwischen 20 und 70 Mikrometern aufweist.

3. Verfahren nach Anspruch 1 oder 2, **dadurch gekennzeichnet, dass** die Deckschicht (14) in einer Schichtstärke zwischen 10 und 30 Mikrometern aufgebracht wird.

4. Verfahren nach einem der Ansprüche 1 bis 3, **dadurch gekennzeichnet, dass** die strahlenhärtenden Harze der Basisschicht ein wässriges Gemisch aus großmolekularen und kleinmolekularen Präpolymeren sind, wobei bevorzugt die Partikelgröße der abrasiven Füllstoffe einer Schichtdicke der Basisschicht (12) angepasst ist.

5. Verfahren nach einem der Ansprüche 1 bis 4, **dadurch gekennzeichnet, dass** als Deckschicht lösungsmittelfreie oder wasserfreie Harze oder Harze in einer strahlenhärtenden, wässrigen Dispersion eingesetzt werden, die einen Wassergehalt von maximal 70 % aufweist/en.

6. Verfahren nach einem der Ansprüche 1 bis 5, **dadurch gekennzeichnet, dass** die Deckschicht vor dem Aushärten oder Vernetzen strukturiert wird und weiter bevorzugt die Strukturierung der Deckschicht bildlich synchron mit einem vor dem Beschichten auf der Trägerschicht (10) aufgedruckten Muster erfolgt.

7. Verfahren nach einem der Ansprüche 1 bis 6, **dadurch gekennzeichnet, dass** das strahlenhärtende Harz der Deckschicht in seiner molekularen Struktur durch Nanopartikel modifiziert wird.

8. Verfahren nach einem der Ansprüche 1 bis 7, **dadurch gekennzeichnet, dass** die Trägerschicht eine trockene Bahn ist, die aus der Gruppe bestehend aus vorimprägniertem Papier mit thermischem oder strahlenvernetzbarem Bindemittel, Kunststofffolie, Holzfurnier, Faserstoffbahn oder flexibles Paneelensubstrat, ausgewählt wird.

9. Verfahren nach einem der Ansprüche 1 bis 8, **dadurch gekennzeichnet, dass** das Trocknen der Basisschicht so erfolgt, dass die mit der Trägerschicht beschichtete Basisschicht eine Restfeuchte unter 1% aufweist oder die mit der Basisschicht beschichtete Trägerschicht klebfrei und wickelfähig vorliegt.

10. Verfahren nach einem der Ansprüche 1 bis 9, **gekennzeichnet durch** das Aufbringen eines thermisch reaktiven Klebers auf die der Basisschicht entgegengesetzten Seite der Trägerschicht, wobei der Kleber ein Auftragsgewicht im Bereich zwischen 2 und 20 gr./m2, bevorzugt 2 bis 10 gr./m2, weiter bevorzugt 2 bis 5 gr./m2, aufweist.

11. Verfahren nach Anspruch 10, **dadurch gekennzeichnet, dass** der Kleber eine Reaktionstemperatur < 160°C, bevorzugt < 100°C, aufweist.

12. Verfahren nach Anspruch 10 oder 11, **dadurch gekennzeichnet, dass** der Kleber so ausgewählt und eingerichtet ist, dass der Schritt des gemeinsamen Aushärtens oder Vernetzens der Deckschicht und der Basisschicht keine Aktivierung des Klebers bewirkt.

13. Verfahren nach einem der Ansprüche 1 bis 12, **dadurch gekennzeichnet, dass** die Schritte des Beschichtens der Trägerschicht, des Trocknens der beschichteten Trägerschicht, des Aufbringens der Deckschicht und des gemeinsamen Aushärtens oder Vernetzens in einem durchgehenden, kontinuierlichen Verfahrensablauf (inline) erfolgt.

14. Verfahren nach einem der Ansprüche 1 bis 13, **gekennzeichnet durch** das Aufpressen des dekorativen, abriebfesten Beschichtungsmaterials auf einen Träger aus Papier, Kunststoff, Holz oder Holzwerkstoffe mittels einer statischen Presse oder mittels einer kontinuierlich arbeitenden Doppelbandpresse mit einem Druck im Bereich zwischen 1 und 80 bar sowie einer Temperatur im Bereich zwischen 100°C und 180°C.

15. Blatt- oder bahnförmige dekorative Beschichtungsfolie mit
- einer Trägerschicht (10) aus Papier und/oder Kunststoff,
- einer auf der Trägerschicht in wässrigem Auftrag gebildeten, ein strahlenhärtendes, jedoch kein thermisch härtendes Harz sowie einen abrasiven, bevorzugt anorganischen Füllstoff aufweisenden Basisschicht (12) und
- einer auf der Basisschicht gebildeten Deckschicht (14), die ein strahlenhärtendes, mit dem Harz der Basisschicht gemeinsam vernetztes Harz und keine abrasiven Füllstoffe aufweist,
- wobei die Schichten so gebildet und der Füllstoff so gewählt sind, dass die Beschichtungsfolie eine Abriebfestigkeit von mehr als 1.500 Umdrehungen, bevorzugt von mehr als 2.500 Umdrehungen, gemessen nach EN 13329 (Methode S42), aufweist.

16. Beschichtungsfolie nach Anspruch 15, **dadurch gekennzeichnet, dass** die Basisschicht und die Deckschicht im ausgehärteten oder vernetzten Zustand eine gemeinsame Dicke von weniger als 50 Mikrometern aufweisen und transparent sind.

17. Beschichtungsfolie nach Anspruch 15 oder 16, **dadurch gekennzeichnet, dass** die durch die Basisschicht sowie die Deckschicht sichtbare Trägerschicht aus Papier und/oder Kunststoff eine Bemusterung aufweist.

18. Beschichtungsfolie nach einem der Ansprüche 15 bis 17, **dadurch gekennzeichnet, dass** die Deckschicht (14) eine Strukturierung aufweist, wobei die Strukturierung bildlich mit einer auf der Trägerschicht vorgesehenen Bemusterung oder Bedruckung synchronisiert ist.

19. Verwendung der Beschichtungsfolie nach einem der Ansprüche 15 bis 18 zum Herstellen von Fußböden, insbesondere flexiblen Fußbodenelementen, Arbeitsplatten, Türen, Fensterbänken, Möbeln, Oberflächen von Küchen oder von industriellen oder Labor-Umgebungen.

## Claims

1. Process for producing a sheet-like or web-like decorative, abrasion-resistant coating material, in particular coating film, having the steps:
- coating a support layer (10) made from paper and/or plastic with a liquid or pasty base layer (12) which is free of organic solvents, and which has aqueous, radiation-curing, but no thermally curing resins and an abrasive, preferably inorganic filler,
- drying the support layer (10) coated with the base layer (12), in particular with heat supply,
- applying a cover layer (14) containing a radiation-curing resin and no abrasive fillers to the dried, non-crosslinked base layer (12) and
- joint curing or crosslinking of the cover layer and the radiation-curing resins in the base layer by irradiation of the cover layer using UV and/or electron rays.

2. Process according to claim 1, **characterised in that** the liquid or pasty base layer (12) is applied at a layer thickness between 10 and 100 micrometres or is applied at such a layer thickness that the base layer in the dried state has a thickness between 20 and 70 micrometres.

3. Process according to claim 1 or 2, **characterised in that** the cover layer (14) is applied at a layer thickness between 10 and 30 micrometres.

4. Process according to one of claims 1 to 3, **characterised in that** the radiation-curing resins of the base layer are an aqueous mixture of large-molecular and small-molecular prepolymers, wherein the particle size of the abrasive fillers is preferably adapted to a layer thickness of the base layer (12).

5. Process according to one of claims 1 to 4, **characterised in that** solvent-free or anhydrous resins or resins in a radiation-curing, aqueous dispersion, which has/have a water content of 70% maximum, are used as a cover layer.

6. Process according to one of claims 1 to 5, **characterised in that** the cover layer is structured before curing or crosslinking and also preferably the structuring of the cover layer takes place graphically synchronously with a pattern printed onto the support layer (10) before coating.

7. Process according to one of claims 1 to 6, **characterised in that** the radiation-curing resin of the cover layer is modified as regards its molecular structure by nanoparticles.

8. Process according to one of claims 1 to 7, **characterised in that** the support layer is a dry web which is selected from the group consisting of preimpregnated paper with thermal or radiation-crosslinkable binder, plastic film, wood veneer, fibrous web or flexible panel substrate.

9. Process according to one of claims 1 to 8, **characterised in that** drying of the base layer is effected so that the base layer coated with the support layer has a residual moisture below 1% or the support layer coated with the base layer is present being tack-free and windable.

10. Process according to one of claims 1 to 9, **characterised by** the application of a thermally reactive adhesive to the side of the support layer opposite to the base layer, wherein the adhesive has a coat weight in the range between 2 and 20 gr./m2, preferably 2 to 10 gr./m2, also preferably 2 to 5 gr./m2.

11. Process according to claim 10, **characterised in that** the adhesive has a reaction temperature < 160°C, preferably < 100°C.

12. Process according to claim 10 or 11, **characterised in that** the adhesive is selected and arranged so that the step of joint curing or crosslinking of the cover layer and of the base layer does not effect activation of the adhesive.

13. Process according to one of claims 1 to 12, **characterised in that** the steps of coating the support layer, drying the coated support layer, applying the cover layer and joint curing or crosslinking takes place in a constant, continuous process sequence (in-line).

14. Process according to one of claims 1 to 13, **characterised by** pressing of the decorative, abrasion-resistant coating material onto a support made from paper, plastic, wood or derived timber products by means of a static press or by means of a continuously operating double-band press at a pressure in the range between 1 and 80 bar and a temperature in the range between 100°C and 180°C.

15. Sheet-like or web-like decorative coating film having
- a support layer (10) made from paper and/or plastic,
- a base layer (12) formed on the support layer by aqueous application, and having a radiation-curing, but no thermally curing resin and an abrasive, preferably inorganic filler and
- a cover layer (14) formed on the base layer and which has a radiation-curing resin jointly crosslinked with the resin of the base layer and no abrasive fillers,
- wherein the layers are formed and the filler selected so that the coating film has an abrasion resistance of more than 1,500 revolutions, preferably of more than 2,500 revolutions, measured according to EN 13 329 (Method S42).

16. Coating film according to claim 15, **characterised in that** the base layer and the cover layer in the cured or crosslinked state have a common thickness of less than 50 micrometres and are transparent.

17. Coating film according to claim 15 or 16, **characterised in that** the support layer made from paper and/or plastic, which is visible through the base layer and the cover layer, has a sample.

18. Coating film according to one of claims 15 to 17, **characterised in that** the cover layer (14) has a structuring, wherein the structuring is synchronised graphically with a sample or print provided on the support layer.

19. Use of the coating film according to one of claims 15 to 18 for producing floors, in particular flexible floor elements, work panels, doors, window sills, furniture, surfaces of kitchens or of industrial or laboratory environments.

## Revendications

1. Procédé de fabrication d'un matériau de revêtement décoratif, résistant à l'abrasion, en forme de feuille ou de bande, en particulier une pellicule de revêtement, avec les étapes :
- enduction d'une couche support (10) en papier et/ou en plastique avec une couche de base (12) liquide ou pâteuse, exempte de solvants organiques, qui comporte des résines aqueuses, durcissables par rayonnement mais non thermodurcissables, ainsi qu'une charge abrasive, de préférence inorganique,
- séchage de la couche support (10) enduite de la couche de base (12), en particulier moyennant un apport de chaleur,
- application d'une couche de couverture (14), contenant une résine durcissable par rayonnement et pas de charge abrasive, sur la couche de base (12) séchée non réticulée et
- durcissement ou réticulation commun(e) de la couche de couverture, ainsi que des résines durcissables par rayonnement dans la couche de base, par irradiation de la couche de couverture par rayons UV ou par faisceaux d'électrons.

2. Procédé selon la revendication 1, **caractérisé en ce que** la couche de base (12) liquide ou pâteuse est appliquée en une épaisseur de couche entre 10 et 100 micromètres ou est appliquée en une épaisseur de couche telle que la couche de base à l'état sec présente une épaisseur entre 20 et 70 micromètres.

3. Procédé selon la revendication 1 ou 2, **caractérisé en ce que** la couche de couverture (14) est appliquée en une épaisseur de couche entre 10 et 30 micromètres.

4. Procédé selon l'une quelconque des revendications 1 à 3, **caractérisé en ce que** les résines durcissables par rayonnement de la couche de base sont un mélange aqueux de prépolymères à grandes molécules et à petites molécules, dans lequel de préférence la taille de particule des charges abrasives est adaptée à une épaisseur de couche de la couche de base (12).

5. Procédé selon l'une quelconque des revendications 1 à 4, **caractérisé en ce que** des résines exemptes de solvant ou exemptes d'eau ou des résines dans une dispersion aqueuse durcissable par rayonnement, qui présente une teneur en eau de 70 % au maximum, sont employées comme couche de couverture.

6. Procédé selon l'une quelconque des revendications 1 à 5, **caractérisé en ce que** la couche de couverture est structurée avant le durcissement ou la réticulation et en outre que la structuration de la couche de couverture s'effectue de préférence de façon synchrone en image avec un motif imprimé avant l'enduction sur la couche support (10).

7. Procédé selon l'une quelconque des revendications 1 à 6, **caractérisé en ce que** la résine durcissable par rayonnement de la couche de couverture est modifiée dans sa structure moléculaire par des nanoparticules.

8. Procédé selon l'une quelconque des revendications 1 à 7, **caractérisé en ce que** la couche support est une bande sèche qui est choisie depuis le groupe constitué par du papier pré-imprégné avec un liant thermique ou réticulable par rayonnement, un film de plastique, un placage de bois, une bande de matériau fibreux ou un substrat flexible de panneau de lambris.

9. Procédé selon l'une quelconque des revendications 1 à 8, **caractérisé en ce que** le séchage de la couche de base s'effectue de telle sorte que la couche de base revêtue de la couche support présente une humidité résiduelle de moins de 1 % ou que la couche support revêtue de la couche de base se présente sans colle et apte à être enroulée.

10. Procédé selon l'une quelconque des revendications 1 à 9, **caractérisé par** l'application d'une colle thermiquement réactive sur la face de la couche support opposée à la couche de base, dans lequel la colle présente un poids d'application entre 2 et 20 g/m2, de préférence de 2 à 10 g/m2, encore plus préférablement de 2 à 5 g/m2.

11. Procédé selon la revendication 10, **caractérisé en ce que** la colle présente une température de réaction < 160 °C, de préférence < 100 °C.

12. Procédé selon la revendication 10 ou 11, **caractérisé en ce que** la colle est choisie et élaborée de telle sorte que l'étape du durcissement ou de la réticulation commun(e) de la couche de couverture et de la couche de base ne provoque pas d'activation de la colle.

13. Procédé selon l'une quelconque des revendications 1 à 12, **caractérisé en ce que** les étapes de l'enduction de la couche support, du séchage de la couche support enduite, de l'application de la couche de couverture et du durcissement ou de la réticulation commun(e) s'effectuent dans un déroulement ininterrompu, continu du processus (en ligne).

14. Procédé selon l'une quelconque des revendications 1 à 13, **caractérisé par** l'application à la presse du matériau de revêtement décoratif, résistant à l'abrasion, sur un support en papier, en plastique, en bois ou en des matériaux à base de bois, au moyen d'une presse statique ou au moyen d'une presse à double bande travaillant en continu, avec une pression dans l'intervalle entre 1 et 80 bars, ainsi qu'avec une température dans l'intervalle entre 100 °C et 180 °C.

15. Pellicule de revêtement décorative, en forme de feuille ou de bande, avec
- une couche support (10) en papier et/ou en plastique,
- une couche de base (12) formée sur la couche support en une application aqueuse, comportant une résine durcissable par rayonnement mais non durcissable thermiquement, ainsi qu'une charge abrasive, de préférence inorganique et
- une couche de couverture (14) formée sur la couche de base, qui comporte une résine durcissable par rayonnement, réticulée en même temps que la résine de la couche de base, et pas de charges abrasives,
- dans laquelle les couches sont formées et que la charge est choisie de telle sorte que la pellicule de revêtement présente une résistance à l'abrasion, mesurée d'après la norme EN 13329 (méthode S42), de plus de 1.500 tours, de préférence de plus de 2.500 tours.

16. Pellicule de revêtement selon la revendication 15, **caractérisée en ce que** la couche de base et la couche de couverture présentent dans l'état durci ou réticulé une épaisseur totale de moins de 50 micromètres et sont transparentes.

17. Pellicule de revêtement selon la revendication 15 ou 16, **caractérisée en ce que** la couche support en papier et/ou en plastique, visible à travers la couche de base ainsi qu'à travers la couche de couverture, comporte un motif.

18. Pellicule de revêtement selon l'une quelconque des revendications 15 à 17, **caractérisée en ce que** la couche de couverture (14) présente une structuration, sachant que la structuration est synchronisée en image avec un motif ou une impression prévues sur la couche support.

19. Utilisation de la pellicule de revêtement selon l'une quelconque des revendications 15 à 18 à la fabrication de sols, en particulier d'éléments de sol flexibles, de plans de travail, de portes, de rebords de fenêtres, de meubles, de surfaces de cuisines ou d'environnements industriels ou de laboratoires.
